# EUROPEAN PATENT SPECIFICATION

(11) **EP 2 377 329 B1**
(45) Date of publication and mention of the grant of the patent: **26.06.2013**
(21) Application number: 09774959.2
(22) Date of filing: 30.11.2009
(51) Int. Cl.: H04R 1/02

(54) **METHOD OF ADJUSTING AN ACOUSTIC OUTPUT FROM A DISPLAY DEVICE**
VERFAHREN ZUR AUTOMATISCHEN EINSTELLUNG DER AKUSTISCHEN AUSGABE EINES DISPLAYS
PROCÉDÉ D'AJUSTEMENT D'UNE SORTIE ACOUSTIQUE D'UN DISPOSITIF D'AFFICHAGE

(30) Priority: 09.12.2008 EP 08171030
(43) Date of publication of application: 19.10.2011
(73) Proprietor: TP Vision Holding B.V., 5656 AE Eindhoven (NL)
(72) Inventor: MELS, Frank, K., I., NL-5656 AE Eindhoven (NL); GOUWY, Christiaan, M., W., NL-5656 AE Eindhoven (NL)
(74) Representative: Hutter, Jacobus Johannes
(86) International application number: PCT/IB2009/055400
(87) International publication number: WO 2010/067250

(56) References cited:
- US-A1- 2008 199 037
- US-B1- 6 741 720
- US-B2- 6 667 759

## Description

### FIELD OF THE INVENTION

The present invention relates to a method of adjusting an acoustic output from a display device. The invention also relates to a display device arranged to carry out such a method.

### BACKGROUND OF THE INVENTION

It is a well-known problem that acoustical performance of prior art audio systems varies according to the way the system is placed in a room. A loudspeaker placed close against a wall will produce significantly more bass output than the same loudspeaker placed away from walls. The same also applies to devices with built-in loudspeakers such as flat panel TV sets. Such TV sets are typically either placed on a surface or hang on the wall, i.e. two different mountings seen from an acoustic point of view. Further, on a flat panel TV set the loudspeakers will typically be placed on the side of the cabinet, sometimes even directed away from the listener position, the loudspeaker position being more or less fixed by strong cabinet design requirements which only allow very narrow space for loudspeakers. Designing a TV set for proper sound performance in one mounting situation will result in poor performance in another mounting situation. Especially the low frequency output will be affected, but most of the audio frequency range may be affected.

The user may trim the sound performance using the traditional bass and treble controls, and in some cases an equalizer function is provided which may under certain circumstances be able to provide a reasonable flat frequency response in a given mounting situation. However, even if possible at all, many users are not capable of using such controls properly to obtain a suitable sound performance, and consequently a poor sound performance from the TV set is the result.

US Patent Application 2008/0199037 discloses an in-wall or in-ceiling mounted speaker provided with a motor-driven tilting mechanism. The motor tilts the speaker at an angle that best suits the acoustic environment. When not in the mood for speaker sound or its appearance, the user may remotely signal the speaker to hide flat on the surrounding surface be it a room wall or ceiling.

US Patent 6,741,720 discloses an in-wall speaker system comprising a crossover circuit for providing an intended frequency response which may be adjusted by controls on the speaker mounting.

### OBJECT AND SUMMARY OF THE INVENTION

It is an object to provide a display device which allows different types of mounting and still provides a good sound performance in different types of mounting.

In a first aspect, the invention provides a display device arranged to receive an input signal with audio and video content, and to generate a visual and an acoustic output accordingly, the display device including
- a cabinet including different mounting fittings arranged for different types of mounting of the display device,
- a display arranged to generate the visual output,
- an acoustic system including one or more loudspeakers, arranged to generate the acoustic output,
- a mounting detector arranged to detect a type of mounting of the display device, and
- compensation means arranged to modify the acoustic output from the display device according to the detected type of mounting of the display device.

The display device according to the invention is able to obtain a good sound performance in different mounting situations, e.g. wall-mounting versus stand-mounting, by means of modifying the acoustic output according to the detected type of mounting of the display device. E.g. by means of modifying the electric input to the loudspeaker according to the type of mounting based on predetermined knowledge of the acoustic performance in such different mounting situations. This allows automatic adjustment of the acoustic output to suit the selected type of mounting, such that an overall acceptable sound performance can be obtained without any action of the user. As will be illustrated in the following, this acoustic compensation can be implemented with low cost components e.g. for use in a flat panel TV set with mounting fittings for wall and stand mounting.

In one embodiment, the compensation means includes a filter arranged to modify an audio signal before being applied to the loudspeaker, and wherein the filter has a frequency response which is adjustable according to the detected type of mounting of the display device. This allows storing digital FIR or IIR based filter coefficients which will provide a substantially flat/natural acoustical response in selected mountings, e.g. based on measurements of the acoustic output of the display device in the respective mounting situations such as wall mounting and stand mounting. Another way could be to have analog filters implemented and switch between them according to the mounting. However, the mounting detector may be able to discriminate between other types of mounting, such as direct wall mounting and arm-on-wall mounting. Especially, the filter may have a frequency response which is adjustable with respect to acoustics response according to the detected type of mounting of the display device, such as at least in the lower/mid audio frequency range, however preferably the filter can affect the whole frequency response in a larger frequency range. The filter may be adjustable by means of selecting one of a pre-stored set of filter settings according to the detected type of mounting of the display device, e.g. storing FIR filter and/or IIR filter coefficients according to predetermined filters for respective mounting types.

The mounting detector may include an electric sensor device, and wherein the type of mounting of the display device is detected by sensing a state of the electric sensor device. Especially, the electric sensor device may be located in connection with at least one of the different mounting fittings of the cabinet (C) so as to sense if said one mounting fitting is in use. Thus, in case of only two possible mounting types, only one electric sensing device, e.g. a micro switch, is required to determine which type of mounting is used and thus determine a modification of the acoustic output accordingly. In one specific embodiment, the electric sensing device is located in connection with one of: a wall mounting fitting, and a stand mounting fitting. The electric sensor device may be an electric switch, i.e. a mechanical way of detecting the type of mounting, e.g. by means of a micro switch. Alternatively or additionally, the electric sensor may include an optic sensor, e.g. an infrared LED and an opto-coupler, arranged for sensing the type of mounting. More alternatively, or additionally, the electric sensor may include a proximitiy detector based on detecting an electromagnetic field, e.g. located to detect proximity between the cabinet and a wall behind the cabinet.

In one embodiment, the mounting detector is arranged to detect the type of mounting of the display device based on an input from a user, e.g. by during display of a setup menu during setup of the display device, where the user is requested to input the current type of mounting of the display.

The display device may include mechanical means arranged for mounting in relating to the loudspeaker so as to acoustically modify the acoustic output from the loudspeaker, e.g. specially formed acoustic reflectors in the form of baffles or horns or the like placed close to the loudspeakers. This requires, of course, a user action, e.g. by informing the user, using the display, to mount a specific mechanical means in response to the detected type of mounting. E.g. such mechanical means can be used to assist electronic compensation and thus obtain a better sound performance without a too radical electric compensation which may be power consuming and cause distortion. E.g. such mechanical means may be integrated with the wall mounting fitting, and thus upon using the wall mounting fitting, the user will automatically also apply the mechanical means and thereby apply the mechanical compensation of the acoustic output from the loudspeaker(s) without the need to perform any special act. The same applies of course to a stand mounting fitting which may be integrated with mechanical means for compensating the acoustic output from the loudspeaker(s), as described above.

Preferably, the compensation means is arranged to modify the acoustic output from the display device in accordance with the type of mounting of the display device, so as to provide a substantially flat acoustic frequency response in a limited audio frequency range at a normal user position irrespective of the type of mounting of the display device.

The display may especially be a flat panel display. Such display type are usually mounted in small cabinets providing severe acoustic design limitations, and thus the display device according to the invention is especially relevant for improving sound performance of devices with such display. The display device may be such as a TV set, a computer display, and a beamer device.

In a second aspect, the invention provides a method of adjusting an acoustic output from a display device according to a type of mounting of the display device, wherein the display device includes a cabinet with different mounting fittings arranged for different types of mounting of the display device, a display arranged to generate the visual output, and a loudspeaker arranged to generate the acoustic output, the method including
- detecting the type of mounting of the display device, and
- modifying the acoustic output from the display device according to the detected type of mounting of the display device.

### BRIEF DESCRIPTION OF THE FIGURES

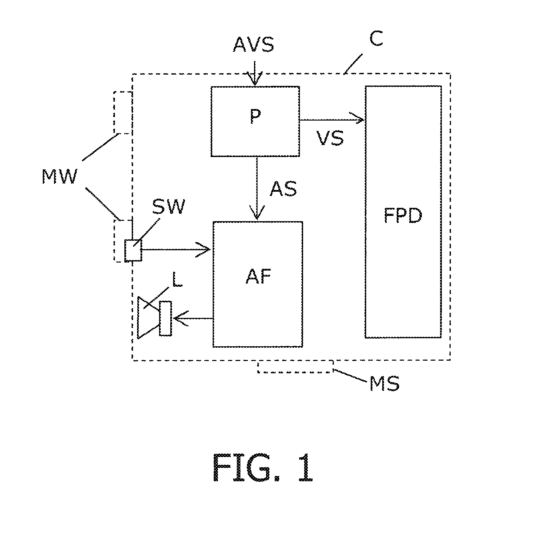

The present invention will now be explained, by way of example only, with reference to the accompanying Fig. 1 which illustrates schematically one embodiment of a display device with an electric switch arranged to detect which type of mounting is used for mounting the display cabinet.

### DETAILED DESCRIPTION OF EMBODIMENTS

Fig. 1 illustrates in schematic form one specific display device embodiment. The display device in this embodiment has a flat panel display FPD, such as an LCD display panel, for delivering a visual output in response to an audio-video input signal AVS. The flat panel display is mounted in a cabinet C. Further, the device includes an acoustic system including one or more loudspeakers L. Such acoustic system may include a set of stereo loudspeakers L, e.g. a set of two loudspeakers in a two-way configuration, i.e. each with two loudspeaker drivers connected via a cross-over network to cover the desired audio frequency range. Normally, the loudspeakers L will be mounted in the cabinet, so as to generate an acoustic output from the display device in response to the audio-visual input signal AVS. In case of the acoustic system including a set of stereo loudspeakers L, separate loudspeaker drivers L are typically arranged in the sides of the cabinet C. A processor P receives the audio-visual input signal AVS, e.g. in the form of an analog antenna input signal or a digital TV signal. In response, the processor P generates an audio signal AS for driving the loudspeaker L, as well a video signal VS for driving the flat panel display.

The cabinet C has two sets of mounting fittings: one set of mounting fittings MW for mounting the cabinet on a wall or the like, e.g. in the form of several threaded holes on a rear side of the cabinet C allowing screw mounting of a wall mounting fitting onto the rear side of the cabinet C, or the wall mounting fittings MW may be in the form of protruding parts on the rear side of the cabinet C arranged for fitting into a counter part of a fitting plate or wall bracket which can then be attached to the wall. Further, the cabinet C has a stand fitting MS on a bottom part of the cabinet C, e.g. in the form of one or more threaded holes for attaching the cabinet C to a stand mount, such as in the form of a mounting fork for attachment to the cabinet C and a stand plate connected to the mounting fork, thus allowing the display device to stand on a table or the like.

Before being applied to the loudspeaker, the audio signal AS is electrically compensated by means of an adjustable filter AF which is arranged to apply an audio filtering selected according to an input from a mounting detector in the form of a switch SW which senses is the wall mounting fittings MW is used. If used, then one audio filtering will be applied, thus serving to compensate the acoustic output from the loudspeaker L corresponding to the acoustic situation where the cabinet C is mounted on a wall. If the switch SW senses that the wall mounting fittings MW is not used, then it can be assumed that the display device is stand mounted and thus in an acoustic "free" environment. Accordingly, the adjustable filter AF selects another filtering suited for compensating the acoustic output from the loudspeaker L to a "free" mounting.

The adjustable filters in the adjustable filter AF may in principle operate on an analog or digital input signal. However, it is preferred that the filtering is performed in the digital domain, such as by means of an IIR filter or an FIR filter, and with separate sets of filter coefficients for a "wall filter" and a "stand filter" stored in a memory. The filter coefficients are determined in a design phase of the display device, e.g. based on acoustic measurements so as to obtain a desired frequency response at a listening position with the specific loudspeaker L used.

The switch SW is preferably a simple on/off micro switch, e.g. mounted in the cabinet C in relation to the wall mounting fittings MW such that its activating member is activated, e.g. pressed, when the wall mounting fittings MW is used. It is appreciated, that of course such switch SW may additionally or alternatively be placed to sense if the stand mounting fittings MS is used. However, in a simple embodiment, only a discrimination between wall and stand mounting is taken into account, and thus only one switch SW is necessary to detect the type of mounting. If more types of mounting needs to be taken into account with respect to acoustic compensation, more switches or other type of sensors may be used as input to the adjustable filter AF in order to be able to select then correct one of a number of pre-stored filter coefficients. To provide a more reliable sensing of the mounting type, two or more switches SW may be used to sense the type of mounting at different locations, e.g. at two or more positions on the rear side of the cabinet C, and/or at two or more positions in connection with a rear side of the cabinet C. If the cabinet C has a built-in stand mount, e.g. such as a beamer device arranged for standing directly on a table or for mounting in a ceiling bracket or the like, then one or more switches SW may be positioned in the bottom of such stand to simply detect if the stand is placed on a surface or not.

In a very simple embodiment, an electric mounting detector can be implemented by a sensor arranged for contact with a mounting screw, e.g. used for either wall MW or stand MS mounting of the cabinet C. The metal chassis of the cabinet C will typically include a threaded hole for fixing of the mounting screw, and the sensor can then be positioned such that a screw will establish electric contact between the sensor and the chassis which is typically electric ground of the device. Hereby it is possible to detect if a screw is mounted, and thus the type of mounting can be determined accordingly.

The desired frequency range for performing the compensation filtering in the adjustable filter AF depends on the actual loudspeaker driver L as well as the location of an acoustic output port on an outer surface of the cabinet C. However, in case of a typical TV set, the most important frequency range is such like 100-8000 Hz, which is the frequency range with the largest variation due to the type of mounting.

In case of an acoustic system including stereo loudspeakers L, typically the same compensation of acoustic output will be selected for the two stereo channels. Thus, in an electronic compensation implementation, the same filter coefficients may be used for the compensation filters in both stereo channels.

To summarize, the invention provides a display device arranged generate a visual and an acoustic output according to an input signal (AVS) with audio (AS) and video (VS) content. The display device includes a cabinet (C) with different mounting fittings (MS, MW) arranged for different types of mounting of the display device. A display (FPD), a loudspeaker (L), a mounting detector (SW), e.g. a microswitch, arranged to detect a type of mounting of the display device, and compensation means (AF) arranged to modify the acoustic output from the display device according to the detected type of mounting of the display device. Hereby, it is possible to adjust the frequency content of the acoustic output from the loudspeaker, e.g. electronically, to correspond to the acoustic environment determined by means of sensing the type of mounting of the display device. E.g. one microswitch can be used to discriminate between wall or stand mounting, and digital coefficients for an IIR or an FIR filter can be selected accordingly to compensate the acoustic output from the display device to a desired response. Hereby sound performance of especially flat panel display devices can be improved, since such devices typically exhibit an audio performance which is highly depending on the type of mounting due.

Although the present invention has been described in connection with the specified embodiments, it is not intended to be limited to the specific form set forth herein. Rather, the scope of the present invention is limited only by the accompanying claims. In the claims, the term "comprising" does not exclude the presence of other elements or steps. Additionally, although individual features may be included in different claims, these may possibly be advantageously combined, and the inclusion in different claims does not imply that a combination of features is not feasible and/or advantageous. In addition, singular references do not exclude a plurality. Thus, references to "a", "an", "first", "second" etc. do not preclude a plurality. Furthermore, reference signs in the claims shall not be construed as limiting the scope.

## Claims

1. A display device arranged to receive an input signal (AVS) with audio (AS) and video (VS) content, and to generate a visual and an acoustic output accordingly, the display device including
- a cabinet (C) including different mounting fittings (MS, MW) arranged for different types of mounting of the display device,
- a display (FPD) arranged to generate the visual output,
- an acoustic system including one or more loudspeakers (L), arranged to generate the acoustic output,
- a mounting detector (SW) arranged to detect a type of mounting of the display device, and
- compensation means (AF) arranged to modify the acoustic output from the display device according to the detected type of mounting of the display device.

2. Display device according to claim 1, wherein the compensation means includes a filter (AF) arranged to modify an audio signal (AS) before being applied to the acoustic system (L), and wherein the filter (AF) has a frequency response which is adjustable according to the detected type of mounting of the display device.

3. Display device according to claim 2, wherein the filter (AF) has a frequency response which is adjustable with respect to amplitude response according to the detected type of mounting of the display device.

4. Display device according to claim 2, wherein the filter (AF) is adjustable by means of selecting one of a pre-stored set of filter settings according to the detected type of mounting of the display device.

5. Display device according to claim 1, wherein the mounting detector includes an electric sensor device (SW), and wherein the type of mounting of the display device is detected by sensing a state of the electric sensor device (SW).

6. Display device according to claim 5, wherein the electric sensor device (SW) is located in connection with at least one of the different mounting fittings (MW) of the cabinet (C) so as to sense if said one mounting fitting (MW) is in use.

7. Display device according to claim 6, wherein the electric sensing device (SW) is located in connection with one of: a wall mounting fitting (MW), and a stand mounting fitting (MS).

8. Display device according to claim 5, wherein the electric sensor device (SW) is an electric switch.

9. Display device according to claim 1, wherein the mounting detector is arranged to detect the type of mounting of the display device based on an input from a user.

10. Display device according to claim 1, including mechanical means arranged for mounting in relating to the acoustic system (L) so as to acoustically modify the acoustic output from the acoustic system (L).

11. Display device according to claim 1, wherein the compensation means (AF) is arranged to modify the acoustic output from the display device in accordance with the type of mounting of the display device, so as to provide a substantially flat acoustic frequency response in a limited audio frequency range at a normal user position irrespective of the type of mounting of the display device.

12. Display device according to claim 1, wherein the display (FPD) is a flat panel display.

13. Display device according to claim 1, being one of: a TV set, a computer display, and a beamer device.

14. A method of adjusting an acoustic output from a display device according to a type of mounting of the display device, wherein the display device includes a cabinet with different mounting fittings arranged for different types of mounting of the display device, a display arranged to generate the visual output, and an acoustic system including one or more loudspeakers, arranged to generate the acoustic output, the method including
- detecting the type of mounting of the display device, and
- modifying the acoustic output from the display device according to the detected type of mounting of the display device.

## Patentansprüche

1. Anzeigegerät, welches angeordnet ist, ein Eingabesignal (AVS) mit Audio- (AS) und Video- (VS) Inhalt zu empfangen, und eine visuelle und eine akustische Ausgabe entsprechend zu erzeugen, wobei das Anzeigegerät umfasst:
- ein Gehäuse (C) mit unterschiedlichen Montageeinpassungen (MS, MW), welche für unterschiedliche Arten einer Montage des Anzeigegerätes angeordnet sind,
- eine Anzeige (FPD), welche angeordnet ist, die visuelle Ausgabe zu erzeugen,
- ein akustisches System mit einem oder mehreren Lautsprechern (L), welches angeordnet ist, die akustische Ausgabe zu erzeugen,
- einen Montageerfasser (SW), welcher angeordnet ist, eine Art einer Montage des Anzeigegerätes zu erfassen, und
- eine Kompensationseinrichtung (AF), welche angeordnet ist, die akustische Ausgabe von dem Anzeigegerät gemäß der erfassten Art einer Montage des Anzeigegerätes zu ändern.

2. Anzeigegerät nach Anspruch 1, wobei die Kompensationseinrichtung ein Filter (AF) umfasst, welches angeordnet ist, ein Audiosignal (AS) zu ändern, bevor dieses auf das akustische System (L) angewendet wird, und wobei das Filter (AF) eine Frequenzantwort aufweist, welche gemäß der erfassten Art einer Montage des Anzeigegerätes einstellbar ist.

3. Anzeigegerät nach Anspruch 2, wobei das Filter (AF) eine Frequenzantwort aufweist, welche in Bezug zu einer Amplitudenantwort gemäß der erfassten Art einer Montage des Anzeigegerätes einstellbar ist.

4. Anzeigegerät nach Anspruch 2, wobei das Filter (AF) mittels eines Auswählens von einer aus einem vorgespeicherten Satzes von Filtereinstellungen gemäß der erfassten Art einer Montage des Anzeigegerätes einstellbar ist.

5. Anzeigegerät nach Anspruch 1, wobei der Montageerfasser ein elektrisches Sensorgerät (SW) umfasst, und wobei die Art einer Montage des Anzeigegerätes durch Erfassen eines Zustands des elektrischen Sensorgerätes (SW) erfasst wird.

6. Anzeigegerät nach Anspruch 5, wobei das elektrische Sensorgerät (SW) in Verbindung mit zumindest einer der unterschiedlichen Montageeinpassungen (MW) des Gehäuses (C) angeordnet ist, um zu erfassen, falls die eine Montageeinpassung (MW) in Verwendung ist.

7. Anzeigegerät nach Anspruch 6, wobei das elektrische Erfassungsgerät (SW) in Verbindung mit einem angeordnet ist, aus: einer Wandmontageeinpassung (MW), und einer Ständermontageeinpassung (MS).

8. Anzeigegerät nach Anspruch 5, wobei das elektrische Sensorgerät (SW) ein elektrischer Schalter ist.

9. Anzeigegerät nach Anspruch 1, wobei der Montageerfasser angeordnet ist, die Art einer Montage des Anzeigegerätes basierend auf einer Eingabe von einem Nutzer zu erfassen.

10. Anzeigegerät nach Anspruch 1, mit einer mechanischen Einrichtung, welche für ein Montieren in Bezug auf das akustische System (L) angeordnet ist, um die akustische Ausgabe von dem akustischen System (L) akustisch zu ändern.

11. Anzeigegerät nach Anspruch 1, wobei die Kompensationseinrichtung (AF) angeordnet ist, die akustische Ausgabe von dem Anzeigegerät gemäß der Art einer Montage des Anzeigegerätes zu ändern, um eine im Wesentlichen flache akustische Frequenzantwort in einem begrenzten Audiofrequenzbereich an einer normalen Nutzerposition ungeachtet der Art einer Montage des Anzeigegerätes bereitzustellen.

12. Anzeigegerät nach Anspruch 1, wobei die Anzeige (FPD) eine Flachbildschirmanzeige ist.

13. Anzeigegerät nach Anspruch 1, welches eines ist, aus: einem TV-Gerät, einem Computerbildschirm, und einem Beamer-Gerät

14. Verfahren eines Einstellens einer akustischen Ausgabe von einem Anzeigegerät gemäß einer Art einer Montage des Anzeigegerätes, wobei das Anzeigegerät ein Gehäuse mit unterschiedlichen Montageeinpassungen, welche für verschiedenen Arten einer Montage des Anzeigegerätes angeordnet sind, eine Anzeige, welche angeordnet ist, die visuelle Ausgabe zu erzeugen, und ein akustisches System mit einem oder mehreren Lautsprechern umfasst, welches angeordnet ist, die akustische Ausgabe zu erzeugen, wobei das Verfahren umfasst:
- Erfassen der Art einer Montage des Anzeigegerätes, und
- Ändern der akustischen Ausgabe von dem Anzeigegerät gemäß der erfassten Art einer Montage des Anzeigegerätes.

## Revendications

1. Dispositif d'affichage réalisé pour recevoir un signal d'entrée (AVS) renfermant des composants audio (AS) et des composants vidéo (VS) et pour générer en conséquence une sortie visuelle et une sortie acoustique, ce dispositif d'affichage comportant :
- un boitier (C) comportant différents raccords de montage (MS, MW) réalisés pour permettre différents types de montage du dispositif d'affichage,
- un élément d'affichage (FPD) réalisé pour générer la sortie visuelle,
- un système acoustique comportant au moins un haut parleur (L) réalisé pour générer la sortie acoustique,
- un détecteur de montage (SW) réalisé pour détecter le type de montage du dispositif d'affichage, et
- des moyens de compensation (AF) réalisé pour modifier la sortie acoustique du dispositif d'affichage en fonction du type de montage détecté de ce dispositif d'affichage.

2. Dispositif d'affichage conforme à la revendication 1, dans lequel les moyens de compensation comportent un filtre (AF) réalisé pour modifier le signal audio (AS) avant qu'il soit appliqué au système acoustique (L), ce filtre (AF) ayant une réponse en fréquence qui est réglable en fonction du type de montage détecté du dispositif d'affichage.

3. Dispositif d'affichage conforme à la revendication 2, dans lequel le filtre (AF) a une réponse en fréquence qui est réglable par rapport à la réponse en amplitude selon le type de montage détecté du dispositif d'affichage.

4. Dispositif d'affichage conforme à la revendication 2, dans lequel le filtre (AF) est réglable par la sélection d'un ajustement de filtre parmi un jeu d'ajustement de filtre pré-stockés, en fonction du type de montage détecté.

5. Dispositif d'affichage conforme à la revendication 1, dans lequel le détecteur de montage comporte un dispositif de détection électrique (SW) et le type de montage du dispositif d'affichage est détecté en captant l'état du dispositif de détection électrique (SW).

6. Dispositif d'affichage conforme à la revendication 5, dans lequel le dispositif de détection électrique (SW) est positionné en fonction d'au moins l'un des différents raccords de montage différents (MW) du boitier (C) pour permettre de détecter si ce raccord de montage (MW) est utilisé.

7. Dispositif d'affichage conforme à la revendication 6, dans lequel le dispositif de détection électrique (SW) est positionné en fonction d'un raccord de montage de paroi (MW) ou d'un raccord de montage de support (MS).

8. Dispositif d'affichage conforme à la revendication 5, dans lequel le dispositif de détection électrique (SW) est un commutateur électrique.

9. Dispositif d'affichage conforme à la revendication 1, dans lequel le détecteur de montage est réalisé pour détecter le type de montage du dispositif d'affichage à partir d'une entrée d'un utilisateur.

10. Dispositif d'affichage conforme à la revendication 1, comprenant des moyens mécaniques réalisés pour permettre le montage par rapport au système acoustique (L) de façon à permettre de faire varier acoustiquement la sortie acoustique du système acoustique (L).

11. Dispositif d'affichage conforme à la revendication 1, dans lequel les moyens de compensation (AF) sont réalisés pour permettre de faire varier la sortie acoustique du dispositif d'affichage en fonction du type de montage du dispositif d'affichage de façon à fournir une réponse en fréquence acoustique essentiellement plane dans une plage de fréquence audio limitée dans une position normale de l'utilisateur quelque soit le type de montage du dispositif d'affichage.

12. Dispositif d'affichage conforme à la revendication 1, dans lequel l'affichage (FPD) est un panneau d'affichage plat.

13. Dispositif d'affichage conforme à la revendication 1, constitué par un affichage TV, un affichage d'ordinateur ou un dispositif projecteur.

14. Procédé de réglage d'une sortie acoustique d'un dispositif d'affichage selon le type de montage de ce dispositif d'affichage selon lequel le dispositif d'affichage comporte un boitier ayant différents raccords de montage réalisés pour permettre différents types de montage du dispositif d'affichage, un affichage réalisé pour générer une sortie visuelle et un système acoustique comprenant au moins un haut parleur réalisé pour générer une sortie acoustique, ce procédé comprenant les étapes consistant à :
- détecter le type de montage du dispositif d'affichage, et
- faire varier la sortie acoustique du dispositif d'affichage en fonction du type de montage détecté du dispositif d'affichage.
